# EUROPÄISCHE PATENTSCHRIFT

(11) **EP 3 985 964 B1**
(45) Veröffentlichungstag und Bekanntmachung des Hinweises auf die Patenterteilung: **26.02.2025**
(21) Anmeldenummer: 21202492.1
(22) Anmeldetag: 13.10.2021
(51) Int. Cl.: H04N 23/66, H04N 23/667, G03B 3/00, G03B 17/56, G03B 3/12, G03B 13/20, G03B 19/18

(54) **FERNSTEUEREINRICHTUNG FÜR EINE BEWEGTBILDKAMERA**
REMOTE CONTROL UNIT FOR MOVING IMAGE CAMERA
DISPOSITIF DE TÉLÉCOMMANDE POUR UNE CAMÉRA À IMAGE ANIMÉE

(30) Priorität: 14.10.2020 DE 202020105870 U
(43) Veröffentlichungstag der Anmeldung: 20.04.2022
(73) Patentinhaber: Arnold & Richter Cine Technik GmbH & Co. Betriebs KG, 80807 München (DE)
(72) Erfinder: VOSS, Hendrik, 81371 München (DE)
(74) Vertreter: Manitz Finsterwald Patent- und Rechtsanwaltspartnerschaft mbB

(56) Entgegenhaltungen:
- WO-A1-2020/061604
- DE-A1- 102004 015 947
- US-A1- 2003 174 414
- US-A1- 2019 132 527

## Beschreibung

Die Erfindung betrifft eine Fernsteuereinrichtung für eine Bewegtbildkamera, die ein Objektiv und wenigstens einen Objektiv-Fokusstellmotor zum Einstellen einer Fokuslage des Objektivs aufweist und der wenigstens eine Entfernungsmesseinrichtung zum Bestimmen eines Entfernungsmesssignals zugeordnet ist. Die Fernsteuereinrichtung umfasst eine tragbare Bedieneinheit mit einem Basisteil, einem ersten Bedienelement, das relativ zu dem Basisteil in eine kontinuierlich variable Einstellposition beweglich ist, und einem zweiten Bedienelement. Die Fernsteuereinrichtung umfasst ferner eine Steuereinrichtung, die dazu ausgebildet ist, in Abhängigkeit von der kontinuierlich variablen Einstellposition des ersten Bedienelements einen Manuellfokuseinstellwert für den Objektiv-Fokusstellmotor zu bestimmen und in einer Manuellfokus-Betriebsart den Manuellfokuseinstellwert auszugeben.

Eine elektronische Bewegtbildkamera umfasst üblicherweise ein integriertes optisches System (Kameraobjektiv) oder einen Objektivanschluss, um wahlweise ein an bestimmte Aufnahmesituationen angepasstes Wechselobjektiv anschließen zu können. Um die mittels des optischen Systems erfassten Bilder aufzeichnen zu können, sind meist ein elektronischer Bildsensor zum Erzeugen von Bildsignalen aus einfallendem Licht und eine Bildsignalverarbeitungseinrichtung zum Umwandeln der Bildsignale in einen digitalen Bilddatenstrom vorgesehen.

Eine Fernsteuereinrichtung kann vorgesehen sein, um eine elektronische Bewegtbildkamera (insbesondere Videokamera) oder auch eine herkömmliche Bewegtbildkamera (insbesondere Filmkamera) zum Aufnehmen von Bewegtbildsequenzen anzusteuern und/oder Aufnahmeparameter einstellen bzw. während einer Aufnahme verändern zu können. Ein die Bewegtbildkamera führender Kameramann muss dadurch lediglich die korrekte Ausrichtung der Kamera zur Aufnahme eines gewünschten Bildausschnitts sicherstellen, während die korrespondierende Einstellung der Aufnahmeparameter von einer weiteren Person, insbesondere einem Kameraassistenten oder einem Schärfezieher, übernommen werden kann. Beispielsweise kann vorgesehen sein, die Bildaufnahmefrequenz, die Verschlusszeit, die Irisblendenöffnung, die Fokuslage bzw. die Schärfe und/oder die Brennweite (Zoom-Faktor) des Kameraobjektivs ferngesteuert einzustellen.

Die Einstellung von Aufnahmeparametern der Kamera und insbesondere der Irisblendenöffnung, der Fokuslage und der Brennweite kann über jeweilige Objektiv-Stellmotoren erfolgen, die in das Kameraobjektiv integriert oder typischerweise als separate, externe Einheit außerhalb des Kameraobjektivs angeordnet sein können. Ein solcher Objektiv-Stellmotor kann mit einem drehbaren Objektivring des Kameraobjektivs verbunden sein, so dass der betreffende Parameter durch Drehen des Objektivrings mittels des Objektiv-Stellmotors verändert werden kann. Eine ferngesteuerte Einstellung der Aufnahmeparameter kann somit durch die Übermittlung von Stellsignalen an den jeweiligen Objektiv-Stellmotor mittels einer Fernsteuereinrichtung erfolgen, um den zugeordneten Objektivrings in eine gewünschte Drehstellung zu überführen.

Um einen Steuerbefehl für einen Objektiv-Stellmotor zum Einstellen eines bestimmten Parameterwertes vorgeben zu können, kann eine tragbare Bedieneinheit einer solchen Fernsteuereinrichtung ein relativ zu einem Basisteil bewegliches (z.B. drehbares) Bedienelement aufweisen, dessen Einstellposition den jeweiligen Steuerbefehl bestimmt. Die Steuereinrichtung kann aus der Einstellposition des Bedienelementes direkt oder indirekt einen zugehörigen Soll-Wert bestimmen und als Steuerbefehl direkt oder indirekt an den Objektiv-Stellmotor ausgeben. Beispielsweise kann die Bewegtbildkamera einen Objektiv-Fokusstellmotor zum Einstellen einer Fokuslage des Objektivs aufweisen, wobei der Benutzer (Kameraassistent oder Schärfezieher) in einer Manuellfokus-Betriebsart der Fernsteuereinrichtung mittels des beweglichen Bedienelements einen Manuellfokuseinstellwert als Soll-Wert für die einzustellende Fokuslage festlegen kann. Weitere Bedienelemente können an der Bedieneinheit für zusätzliche Steuerungsaufgaben vorgesehen sein, beispielsweise um den Wert der Irisblendenöffnung per Fernsteuerung ändern zu können.

Eine solche Fernsteuereinrichtung ist beispielsweise aus DE 196 29 484 A1, WO 2010/046237 A1 und DE 10 2017 128 393 A1 bekannt. Ferner zeigt beispielsweise DE 42 19 331 A1 eine Fernsteuereinrichtung zum Einstellen unterschiedlicher Aufnahmeparameter vor und insbesondere während einer Bewegtbildaufnahme durch Ansteuern jeweiliger Objektiv-Stellmotoren.

Der Bewegtbildkamera kann auch eine Entfernungsmesseinrichtung zum Bestimmen eines Entfernungsmesssignals zugeordnet sein. Das Entfernungsmesssignal kann direkt oder indirekt einer gemessenen Entfernung der Bewegtbildkamera (insbesondere der Bildebene) relativ zu einem Motiv im Objektraum entsprechen. Aufgrund derartiger Entfernungsmesssignale ist beispielsweise eine Autofokus-Betriebsart möglich, bei der die Fokuslage gemäß der gemessenen Entfernung eingestellt wird und insbesondere auch einer variierenden Entfernung des Motivs folgen kann. Aus DE 10 2004 015 947 A1 und DE 10 2004 037 296 A1 sind derartige Entfernungsmesseinrichtungen bekannt.

Während der Aufnahme einer Bewegtbildsequenz kann es auch erwünscht sein, zwischen einer Autofokus-Betriebsart (automatisches Fokussieren gemäß der Entfernungsmesseinrichtung) und einer Manuellfokus-Betriebsart (händisches Fokussieren mittels der Fernsteuereinrichtung) zu wechseln. Allerdings kann bei einem derartigen Wechsel der Quelle des Soll-Werts für den Objektiv-Fokusstellmotor das Problem auftreten, dass die am Objektiv eingestellte Fokuslage sich unerwünscht abrupt ändert.

Eine Fernsteuereinrichtung, die sowohl eine manuelle Fokuseinstellung als auch eine automatische Fokuseinstellung einer Bewegtbildkamera ermöglicht, ist in US 2019/132527 A1 beschrieben. Bei dieser Fernsteuereinrichtung kann wahlweise eine manuelle Fokuseinstellung durch Drehen eines Bedienrads erfolgen, wobei zudem eine automatische Fokussierung auf ein jeweiliges Objekt durch Drücken eines zugeordneten Knopfes erfolgen kann. Die Distanzen zu den jeweiligen Objekten sollen dabei mittels eines sekundären Systems, insbesondere eines sekundären Kamerasystems, und eines Computersystems bestimmt werden.

Zudem sind Einrichtungen für eine automatische Fokussierung einer Kamera in US 2003/174414 A1 und WO 2020/061604 A1 beschrieben.

Es ist eine Aufgabe der Erfindung, eine Fernsteuereinrichtung zum Steuern eines Objektiv-Fokusstellmotors einer Bewegtbildkamera zu schaffen, welche bei einem Wechsel der Quelle für den Soll-Wert der einzustellenden Fokuslage einen sanften Übergang ermöglicht.

Diese Aufgabe wird gelöst durch eine Fernsteuereinrichtung mit den Merkmalen des Anspruchs 1.

Die Steuereinrichtung der Fernsteuereinrichtung ist dazu ausgebildet, in Abhängigkeit von einer Betätigung des zweiten Bedienelements der Bedieneinheit in einer Fokusübergangs-Betriebsart der Fernsteuereinrichtung den Objektiv-Fokusstellmotor zum Einstellen der Fokuslage gemäß einer Abfolge von mehreren verschiedenen Fokuseinstell-Zwischenwerten zu veranlassen, die sich ausgehend von einem ersten Soll-Wert der Fokuslage einem zweiten Soll-Wert der Fokuslage annähern, wobei der erste Soll-Wert oder der zweite Soll-Wert der Fokuslage dem Entfernungsmesssignal der Entfernungsmesseinrichtung entspricht.

Die Fernsteuereinrichtung ermöglicht somit zum einen ein händisches Fokussieren durch Bewegen des ersten Bedienelements relativ zu dem Basisteil der Bedieneinheit. Das erste Bedienelement kann in eine kontinuierlich variable Einstellposition gebracht werden, um einen Manuellfokuseinstellwert für die Fokuslage vorzugeben oder den Manuellfokuseinstellwert kontinuierlich variabel zu ändern. Der Manuellfokuseinstellwert bildet somit einen Soll-Wert, der je nach Betriebsart der Fernsteuereinrichtung verwendet werden kann, aber nicht zwingend verwendet werden muss.

Ergänzend kann der Benutzer nämlich mittels des zweiten Bedienelements der Bedieneinheit bewirken, dass die Steuereinrichtung der Fernsteuereinrichtung den Objektiv-Fokusstellmotor zum Einstellen der Fokuslage gemäß einer Abfolge einer Vielzahl von Fokuseinstell-Zwischenwerten veranlasst, insbesondere durch direkte oder indirekte Ansteuerung, wobei diese Fokuseinstell-Zwischenwerte sich ausgehend von einem ersten Soll-Wert einem zweiten Soll-Wert der Fokuslage annähern. Hierdurch kann ein kontinuierlicher oder im Wesentlichen kontinuierlicher Übergang zwischen dem ersten Soll-Wert und dem zweiten Soll-Wert der Fokuslage bewirkt werden (Fokusübergangs-Betriebsart der Fernsteuereinrichtung).

Dieser Übergang kann mittels des zweiten Bedienelements ausgelöst oder in seinem Verlauf auch aktiv beeinflusst werden, wie dies nachfolgend für einige Ausführungsformen erläutert wird. Die einzelnen Fokuseinstell-Zwischenwerte können von der Steuereinrichtung der Fernsteuereinrichtung oder von einer nachgelagerten Steuereinheit bestimmt werden (beispielsweise aufgrund eines Ausführungsbefehls der Steuereinrichtung der Fernsteuereinrichtung).

Der erste Soll-Wert kann einen Start-Soll-Wert der Fokuslage bilden, und der zweite Soll-Wert kann einen Ziel-Soll-Wert der Fokuslage bilden. Die Fokuseinstell-Zwischenwerte können insbesondere aktuelle Soll-Werte der Fokuslage bilden, die von dem Objektiv-Fokusstellmotor einzustellen sind und die während der Fokusübergangs-Betriebsart aus einem abnehmenden Anteil des ersten Soll-Werts (als Start-Soll-Wert) und aus einem zunehmenden Anteil des zweiten Soll-Werts (als Ziel-Soll-Wert) zusammengesetzt sind. Der erste Soll-Wert und der zweite Soll-Wert der Fokuslage können feste Werte sein oder während des Übergangs auch noch anpassbar sein.

In der Fokusübergangs-Betriebsart kann einer der beiden Soll-Werte der Fokuslage (erster Soll-Wert oder zweiter Soll-Wert) dem Entfernungsmesssignal der zugeordneten Entfernungsmesseinrichtung entsprechen. Hierfür kann der betreffende Soll-Wert insbesondere durch das Entfernungsmesssignal gebildet oder hieraus abgeleitet sein. Dieser Soll-Wert kann während der Fokusübergangs-Betriebsart auch noch anpassbar sein bzw. angepasst werden, insbesondere wenn es sich um den zweiten Soll-Wert bzw. den Ziel-Soll-Wert handelt und das Entfernungsmesssignal sich während der Fokusübergangs-Betriebsart noch ändert. Die Fokusübergangs-Betriebsart der Fernsteuereinrichtung kann somit insbesondere für einen Übergang zwischen der Manuellfokus-Betriebsart und einer Autofokus-Betriebsart (automatisches Fokussieren gemäß der Entfernungsmesseinrichtung) dienen, oder für einen Übergang zwischen verschiedenen Autofokus-Betriebsarten (wie nachfolgend noch erläutert wird).

Durch eine derartige Fokusübergangs-Betriebsart der Fernsteuereinrichtung wird bei einem Wechsel der Betriebsart bzw. bei einem Wechsel von einem ersten Soll-Wert zu einem zweiten Soll-Wert der Fokuslage, insbesondere bei einem Wechsel der Quelle für den jeweiligen Soll-Wert, somit ein sanfter Übergang ermöglicht.

Im Zusammenhang mit der Erfindung ist unter einem kontinuierlichen oder im Wesentlichen kontinuierlichen Übergang auch die im Falle von digitaler Signalverarbeitung resultierende Vielzahl von diskreten Werten zu verstehen, die der Abtastungsauflösung (z.B. eines Analog/Digital-Wandlers) entsprechen und zumindest als quasikontinuierlich erscheinen.

Erfindungsgemäß ist die Steuereinrichtung zudem dazu ausgebildet, die Fokuseinstell-Zwischenwerte zu bestimmen und auszugeben (insbesondere als aktuelle Soll-Werte), um den Objektiv-Fokusstellmotor direkt oder indirekt zu steuern. Die endgültige Bestimmung der Fokuseinstell-Zwischenwerte kann bei einigen Ausführungsformen jedoch auch außerhalb der Steuereinrichtung geschehen, beispielsweise wenn eine Berechnung von Fokuseinstell-Zwischenwerten basierend auf zwei verschiedenen Entfernungsmesssignalen durchgeführt werden soll und die Steuereinrichtung lediglich den Ausführungsbefehl hierfür ausgibt.

Erfindungsgemäß entspricht die Abfolge der mehreren verschiedenen Fokuseinstell-Zwischenwerte einer kontinuierlichen oder im Wesentlichen kontinuierlichen Annäherung der Fokuslage von dem ersten Soll-Wert an den zweiten Soll-Wert.

Ferner entsprechen die Fokuseinstell-Zwischenwerte erfindungsgemäß einer jeweiligen Interpolation zwischen dem ersten Soll-Wert der Fokuslage und dem zweiten Soll-Wert der Fokuslage. Eine solche Interpolation kann beispielsweise einer Gewichtung entsprechen, beispielsweise mit einem linearen Verlauf der Gewichtung zwischen dem ersten Soll-Wert und dem zweiten Soll-Wert. Eine derartige Interpolation kann während der Fokusübergangs-Betriebsart der Fernsteuereinrichtung auch noch dynamisch anpassbar sein, insbesondere an einen sich während der Fokusübergangs-Betriebsart ändernden zweiten Soll-Wert bzw. den Ziel-Soll-Wert.

Nachfolgend werden vorteilhafte Ausführungsformen der Erfindung erläutert.

Bei einigen Ausführungsformen kann der eine von erstem und zweitem Soll-Wert der Fokuslage dem Entfernungsmesssignal der zugeordneten Entfernungsmesseinrichtung entsprechen, wobei der andere von erstem und zweitem Soll-Wert der Fokuslage dem Manuellfokuseinstellwert gemäß dem ersten Bedienelement oder einem weiteren Entfernungsmesssignal entspricht. Das Entfernungsmesssignal und das weitere Entfernungsmesssignal können voneinander verschieden sein und insbesondere den Entfernungen unterschiedlicher Motive im Objektraum entsprechen. Das Entfernungsmesssignal und das weitere Entfernungsmesssignal können von derselben Entfernungsmesseinrichtung erzeugt sein (beispielsweise im Falle einer bildsensorbasierten Entfernungsmessung). Alternativ hierzu kann das weitere Entfernungsmesssignal von einer weiteren Entfernungsmesseinrichtung erzeugt sein. In dem letztgenannten Fall können die Entfernungsmesseinrichtung und die weitere Entfernungsmesseinrichtung derselben Bewegtbildkamera zugeordnet sein.

Somit kann je nach Ausführungsform einer der beiden Soll-Werte der Fokuslage, der dem Start-Soll-Wert oder dem Ziel-Soll-Wert des Übergangs bilden soll, dem Entfernungsmesssignal entsprechen. Ferner kann ein anderer der beiden Soll-Werte der Fokuslage dem Manuellfokuseinstellwert entsprechen (insbesondere für einen Übergang zwischen einer Manuellfokus-Betriebsart und einer Autofokus-Betriebsart). Je nach Ausführungsform kann der andere der beiden Soll-Werte der Fokuslage jedoch auch einem weiteren Entfernungsmesssignal (insbesondere derselben oder einer weiteren zugeordneten Entfernungsmesseinrichtung) entsprechen. Beispielsweise kann erwünscht sein, dass die Fokuslage zunächst einem ersten Motiv im Objektraum folgt (erste Autofokus-Betriebsart) und sich sodann jedoch ändert und einem zweiten Motiv im Objektraum folgt (zweite Autofokus-Betriebsart). Somit kann die Fokusübergangs-Betriebsart einen Übergang zwischen einer ersten und einer zweiten Autofokus-Betriebsart bewirken, wobei während der ersten und zweiten Autofokus-Betriebsart und dazwischen erfolgenden Fokusübergangs-Betriebsart kein direktes händisches Fokussieren mittels der Fernsteuereinrichtung erfolgt (allerdings kann bei einigen Ausführungsformen der Übergang mittels des ersten Bedienelements steuerbar sein, wie nachfolgend noch erläutert wird).

Bei einigen Ausführungsformen kann der Soll-Wert der Fokuslage sich während der Fokusübergangs-Betriebsart auch noch ändern, insbesondere wenn es sich um den zweiten Soll-Wert bzw. den Ziel-Soll-Wert handelt. Bei einigen Ausführungsformen kann jedoch auch vorgesehen sein, dass eine Bewegung des ersten Bedienelements während der Fokusübergangs-Betriebsart ignoriert wird, insbesondere wenn es sich bei dem Manuellfokuseinstellwert um den ersten Soll-Wert bzw. den Start-Soll-Wert handelt.

Bei einigen Ausführungsformen kann der zweite Soll-Wert der Fokuslage bereits zu Beginn der Fokusübergangs-Betriebsart festgelegt sein und somit für die gesamte Dauer der Fokusübergangs-Betriebsart feststehen. Bei anderen Ausführungsformen kann der zweite Soll-Wert der Fokuslage zu Beginn der Fokusübergangs-Betriebsart lediglich vorläufig definiert sein und während der Fokusübergangs-Betriebsart noch anpassbar sein (beispielsweise wenn der zweite Soll-Wert von einer Entfernungsmesseinrichtung vorgegeben wird und die Entfernung des Motivs sich während der Fokusübergangs-Betriebsart noch ändert).

Bei einigen Ausführungsformen können die verschiedenen Fokuseinstell-Zwischenwerte unterschiedlich gewichteten Interpolationen zwischen dem ersten Soll-Wert der Fokuslage und dem zweiten Soll-Wert der Fokuslage entsprechen.

Bei einigen Ausführungsformen kann die Steuereinrichtung vollständig in die Bedieneinheit integriert sein.

Bei anderen Ausführungsformen kann lediglich ein Teil der Steuereinrichtung in die Bedieneinheit integriert sein, wobei ein anderer Teil der Steuereinrichtung an der Bewegtbildkamera angeordnet ist. Bei derartigen Ausführungsformen kann die Steuereinrichtung dezentral aufgebaut sein (z.B. mit einer Bedieneinheitsteuereinheit und einer der Bewegtbildkamera zugeordneten Objektivsteuereinheit), wobei die verschiedenen Teile der Steuereinrichtung per Funk oder per Kabel miteinander kommunizieren können. Im Falle einer derartigen verteilten Anordnung der Steuereinrichtung kann der an der Bedieneinheit angeordnete Teil eine Ausgabeeinrichtung aufweisen, die dazu ausgebildet ist, Positionssignale eines dem ersten und/oder dem zweiten Bedienelement zugeordneten Positionsgebers an den an der Bewegtbildkamera angeordneten Teil der Steuereinrichtung zu übermitteln.

Die genannte Interpolation kann insbesondere von dem an der Bedieneinheit angeordneten Teil der Steuereinrichtung der Fernsteuereinrichtung durchgeführt werden. Sofern die Interpolation auf einem Entfernungsmesssignal einer Entfernungsmesseinrichtung der zugeordneten Bewegtbildkamera basiert, muss das Entfernungsmesssignal jedoch an die Bedieneinheit übermittelt werden. Alternativ hierzu kann der an der Bedieneinheit angeordnete Teil der Steuereinrichtung dazu ausgebildet sein, in der Fokusübergangs-Betriebsart lediglich einen Befehl zum Verwenden von Fokuseinstell-Zwischenwerten auszugeben. Somit kann die tragbare Bedieneinheit den Objektiv-Fokusstellmotor auch lediglich indirekt ansteuern, wobei ein Befehl ausgegeben wird, der die Betriebsart vorgibt, und wobei erforderlichenfalls die als Berechnungsgrundlage erforderlichen Werte ausgegeben werden, insbesondere der aktuelle Manuellfokuseinstellwert oder der nachstehend noch erläuterte Übergangseinstellwert. Die Bedieneinheit bzw. der dort befindliche Teil der Steuereinrichtung der Fernsteuereinrichtung liefert bei einer derartigen Ausführungsform also lediglich die notwendigen Befehle und Werte, wobei eine Interpolation von dem der Bewegtbildkamera zugeordneten Teil der Steuereinrichtung (z.B. Objektivsteuereinheit) durchgeführt werden kann.

Bei einigen Ausführungsformen kann die Steuereinrichtung z.B. einen oder mehrere Mikroprozessor(en) aufweisen.

Bei einigen Ausführungsformen kann das erste Bedienelement relativ zu dem Basisteil der Bedieneinheit drehbar sein, beispielsweise als Drehknopf. Das erste Bedienelement kann bei einigen Ausführungsformen relativ zu dem Basisteil der Bedieneinheit unbegrenzt drehbar oder lediglich zwischen zwei Drehanschlägen drehbar sein.

Bei einigen Ausführungsformen kann das Basisteil der Bedieneinheit einen Positionsgeber aufweisen, welcher dazu ausgebildet ist, die kontinuierlich variable Einstellposition des ersten Bedienelementes relativ zu dem Basisteil zu erfassen und ein entsprechendes Positionssignal zu erzeugen. Die Steuereinrichtung kann dazu ausgebildet sein, in Abhängigkeit von diesem Positionssignal den Manuellfokuseinstellwert zu bestimmen, beispielsweise gemäß einer vorbestimmten Zuordnungsvorschrift.

Bei einigen Ausführungsformen kann das Basisteil der Bedieneinheit eine elektronische Anzeigeeinrichtung zum Anzeigen von Soll-Werten und/oder Ist-Werten der Fokuslage des Objektivs aufweisen. Insbesondere kann die Steuereinrichtung dazu ausgebildet sein, einen Ist-Wert einer eingestellten Fokuslage des Objektivs zu empfangen. Derartige Ist-Werte der Fokuslage können aufgrund einer Übermittlung von der zugeordneten Bewegtbildkamera bekannt sein und dem Benutzer als Orientierung angezeigt werden. Als Ist-Werte können beispielsweise Positionsmesswerte (insbesondere sogenannte Encoder-Werte) des Objektiv-Fokusstellmotors verwendet werden. Die elektronische Anzeigeeinrichtung kann insbesondere berührungsempfindlich sein, um auch als Schnittstelle für Benutzereingaben zu dienen.

Bei einigen Ausführungsformen kann die Bedieneinheit eine Schnittstelle zur Kommunikation mit der Bewegtbildkamera aufweisen, insbesondere ein Funkmodul zum drahtlosen Aussenden von Soll-Werten der Fokuslage, sonstigen Werten oder Befehlen an die Bewegtbildkamera, und/oder zum drahtlosen Empfangen von Daten von der Bewegtbildkamera (z.B. von Ist-Werten der Fokuslage). Eine derartige Schnittstelle bzw. ein derartiges Funkmodul kann mit der Steuereinrichtung verbunden sein. Alternativ zu einer drahtlosen Kommunikation kann eine drahtgebundene Verbindung vorgesehen sein.

Bei einer generellen ersten Ausführungsform kann das zweite Bedienelement relativ zu dem Basisteil der Bedieneinheit zwischen einer ersten Steuerposition und einer zweiten Steuerposition in kontinuierlich variable Zwischenpositionen beweglich sein, wobei die Steuereinrichtung dazu ausgebildet ist, in Abhängigkeit von der jeweiligen Zwischenposition des zweiten Bedienelements einen jeweiligen Übergangseinstellwert zu bestimmen, wobei die Fokuseinstell-Zwischenwerte von dem jeweiligen Übergangseinstellwert abhängen. Somit kann aus einer Zwischenposition des zweiten Bedienelements ein Übergangseinstellwert abgeleitet werden, der einem gewünschten Grad des Übergangs zwischen dem ersten Soll-Wert und dem zweiten Soll-Wert der Fokuslage entsprechen kann. Dieser Übergangseinstellwert kann dann der Bestimmung eines jeweiligen Fokuseinstell-Zwischenwerts zugrunde gelegt werden. Beispielsweise kann der jeweilige Übergangseinstellwert direkt oder indirekt als Gewichtung einer Interpolation verwendet werden. Der Benutzer kann hierdurch einen gewünschten Grad und/oder zeitlichen Verlauf des Übergangs individuell händisch vorgeben.

Bei einigen Ausführungsformen kann anhand der ersten oder zweiten Steuerposition des zweiten Bedienelements die Quelle des Soll-Werts für die Fokuslage ausgewählt werden, und durch Bewegen des zweiten Bedienelements in eine der Zwischenpositionen kann ein gewünschter Fokuseinstell-Zwischenwert als tatsächlich einzustellender Soll-Wert ausgewählt werden.

Bei einigen Ausführungsformen können die Fokuseinstell-Zwischenwerte einer gemäß dem jeweiligen Übergangseinstellwert gewichteten Interpolation zwischen dem ersten Soll-Wert der Fokuslage und dem zweiten Soll-Wert der Fokuslage entsprechen. Insbesondere kann die Interpolation zur Ermittlung des jeweiligen Fokuseinstell-Zwischenwerts mit einer variablen Gewichtung zwischen dem Entfernungsmesssignal der Entfernungsmesseinrichtung einerseits und dem Manuellfokuseinstellwert gemäß dem ersten Bedienelement oder einem weiteren Entfernungsmesssignal andererseits entsprechen, wobei die Gewichtung von dem jeweiligen Übergangseinstellwert gemäß der Zwischenposition des zweiten Bedienelements abhängt.

Bei einigen Ausführungsformen kann das zweite Bedienelement der Bedieneinheit linear oder drehbar relativ zu dem Basisteil beweglich sein, beispielsweise als Schieberegler oder Drehknopf.

Bei einigen Ausführungsformen kann die erste Steuerposition des zweiten Bedienelements einem ersten Endanschlag entsprechen, und die zweite Steuerposition des zweiten Bedienelements kann einem zweiten Endanschlag entsprechen. Hierdurch können die erste Steuerposition und die zweite Steuerposition definierten Einstellpositionen des zweiten Bedienelements entsprechen, die von dem Benutzer als mechanische Anschläge spürbar sind, welche die mögliche Bewegung des zweiten Bedienelements begrenzen. Alternativ hierzu kann jedoch auch vorgesehen sein, dass das zweite Bedienelement ausgehend von einer Zwischenposition über die erste Steuerposition oder die zweite Steuerposition hinaus bewegt werden kann (beispielsweise falls das zweite Bedienelement unbegrenzt drehbar ist oder als ein virtuelles Bedienelement an einer elektronischen Anzeigeeinrichtung ausgebildet ist). Bei derartigen Ausführungsformen kann die Quelle des Soll-Werts für die Fokuslage insbesondere durch ein Erreichen oder Überfahren der ersten oder zweiten Steuerposition ausgewählt werden. Die erste und zweite Steuerposition kann dem Benutzer bei einigen Ausführungsformen an einer elektronischen Anzeigeeinrichtung angezeigt werden. Sofern keine Endanschläge vorgesehen sind, kann dem Benutzer das Erreichen oder Überfahren der ersten oder zweiten Steuerposition bei einigen Ausführungsformen haptisch signalisiert werden (beispielsweise durch Vibrieren).

Bei einigen Ausführungsformen kann das Basisteil der Bedieneinheit einen Positionsgeber aufweisen, welcher dazu ausgebildet ist, eine jeweilige Einstellposition des zweiten Bedienelementes relativ zu dem Basisteil zu erfassen und ein entsprechendes Positionssignal zu erzeugen, wobei die Steuereinrichtung dazu ausgebildet ist, in Abhängigkeit von dem Positionssignal den jeweiligen Übergangseinstellwert zu bestimmen.

Bei dem zweiten Bedienelement der Bedieneinheit kann es sich insbesondere um ein Bedienelement (beispielsweise Schieberegler) handeln, der in einer von der Fokusübergangs-Betriebsart verschiedenen Blendeneinstell-Betriebsart dazu dient, einen Soll-Wert der Irisblendenöffnung des Objektivs der zugeordneten Bewegtbildkamera vorzugeben. Die Steuereinrichtung kann dazu ausgebildet sein, in der Blendeneinstell-Betriebsart in Abhängigkeit von den kontinuierlich variablen Zwischenpositionen des zweiten Bedienelements Blendeneinstellwerte für einen Objektiv-Blendenstellmotor der Bewegtbildkamera zu bestimmen und auszugeben. Somit kann dasselbe Bedienelement in verschiedenen Betriebsarten unterschiedliche Funktionen erfüllen. Ein Umschalten zwischen der Fokusübergangs-Betriebsart und der Blendeneinstell-Betriebsart kann beispielsweise durch Betriebsartschalter erfolgen. Ein solcher Betriebsartschalter kann auch als ein virtueller Schalter einer berührungsempfindlichen Anzeigeeinrichtung der Bedieneinheit ausgebildet sein.

Gemäß einer ersten Variante der generellen ersten Ausführungsform kann die Steuereinrichtung dazu ausgebildet sein,
- in dem Fall, dass das zweite Bedienelement der Bedieneinheit in die erste Steuerposition bewegt ist, den Objektiv-Fokusstellmotor zum Einstellen der Fokuslage gemäß dem Entfernungsmesssignal der Entfernungsmesseinrichtung zu veranlassen;
- in dem Fall, dass das zweite Bedienelement in die zweite Steuerposition bewegt ist, den Objektiv-Fokusstellmotor zum Einstellen der Fokuslage gemäß dem Manuellfokuseinstellwert zu veranlassen; und
- in dem Fall, dass das zweite Bedienelement in eine der kontinuierlich variablen Zwischenpositionen bewegt ist, den Objektiv-Fokusstellmotor zum Einstellen der Fokuslage gemäß dem jeweiligen Fokuseinstell-Zwischenwert zu veranlassen.

Somit können das Entfernungsmesssignal und der Manuellfokuseinstellwert als erster Soll-Wert und zweiter Soll-Wert dienen, oder umgekehrt. Hierdurch kann die Fokusübergangs-Betriebsart einen Übergang zwischen einer Manuellfokus-Betriebsart und einer Autofokus-Betriebsart bewirken.

Die Fokuseinstell-Zwischenwerte können bei derartigen Ausführungsformen insbesondere einer Interpolation zwischen dem Entfernungsmesssignal der Entfernungsmesseinrichtung und dem Manuellfokuseinstellwert gemäß der Einstellposition des ersten Bedienelements entsprechen. Hierbei kann die Interpolation insbesondere gemäß dem jeweiligen Übergangseinstellwert des zweiten Bedienelements gewichtet sein.

Die Steuereinrichtung kann bei derartigen Ausführungsformen dazu ausgebildet sein, das Entfernungsmesssignal der Entfernungsmesseinrichtung zu empfangen; die Fokuseinstell-Zwischenwerte in Abhängigkeit von dem Manuellfokuseinstellwert, dem Entfernungsmesssignal und dem jeweiligen Übergangseinstellwert zu bestimmen; und die Fokuseinstell-Zwischenwerte auszugeben.

Gemäß einer zweiten Variante der generellen ersten Ausführungsform kann die Steuereinrichtung dazu ausgebildet sein,
- in dem Fall, dass das zweite Bedienelement in die erste Steuerposition bewegt ist, den Objektiv-Fokusstellmotor zum Einstellen der Fokuslage gemäß dem Entfernungsmesssignal der Entfernungsmesseinrichtung zu veranlassen;
- in dem Fall, dass das zweite Bedienelement in die zweite Steuerposition bewegt ist, den Objektiv-Fokusstellmotor zum Einstellen der Fokuslage gemäß einem weiteren Entfernungsmesssignal zu veranlassen; und
- in dem Fall, dass das zweite Bedienelement in eine der kontinuierlich variablen Zwischenpositionen bewegt ist, den Objektiv-Fokusstellmotor zum Einstellen der Fokuslage gemäß dem jeweiligen Fokuseinstell-Zwischenwert zu veranlassen.

Somit können das Entfernungsmesssignal einer ersten Entfernungsmesseinrichtung und das weitere Entfernungsmesssignal (insbesondere der ersten Entfernungsmesseinrichtung oder einer zweiten Entfernungsmesseinrichtung) als erster Soll-Wert und zweiter Soll-Wert dienen, oder umgekehrt. Hierdurch kann die Fokusübergangs-Betriebsart einen Übergang zwischen einer ersten und einer zweiten Autofokus-Betriebsart bewirken, wenn die Fokuslage zunächst einem ersten Motiv im Objektraum entspricht und/oder folgen soll (erste Autofokus-Betriebsart) und sodann jedoch einem zweiten Motiv im Objektraum entsprechen und/oder folgen soll (zweite Autofokus-Betriebsart).

Die Fokuseinstell-Zwischenwerte können bei derartigen Ausführungsformen einer Interpolation zwischen dem Entfernungsmesssignal der Entfernungsmesseinrichtung und dem weiteren Entfernungsmesssignal entsprechen. Hierbei kann die Interpolation insbesondere gemäß dem jeweiligen Übergangseinstellwert des zweiten Bedienelements gewichtet sein.

Die Steuereinrichtung kann bei derartigen Ausführungsformen dazu ausgebildet sein, das Entfernungsmesssignal der Entfernungsmesseinrichtung und das weitere Entfernungsmesssignal zu empfangen; die Fokuseinstell-Zwischenwerte in Abhängigkeit von dem Entfernungsmesssignal, dem weiteren Entfernungsmesssignal und dem jeweiligen Übergangseinstellwert zu bestimmen; und die Fokuseinstell-Zwischenwerte auszugeben.

Bei einer generellen zweiten Ausführungsform kann die Fokusübergangs-Betriebsart der Fernsteuereinrichtung durch die Betätigung des zweiten Bedienelements der Bedieneinheit auslösbar sein, wobei die Steuereinrichtung dazu ausgebildet ist, in der Fokusübergangs-Betriebsart den Objektiv-Fokusstellmotor zum Einstellen der Fokuslage gemäß der Abfolge von mehreren verschiedenen Fokuseinstell-Zwischenwerte gemäß einem vorbestimmten Verlauf des Übergangs zwischen dem ersten Soll-Wert der Fokuslage und dem zweiten Soll-Wert der Fokuslage zu veranlassen.

Bei einer derartigen Ausführungsform kann das zweite Bedienelement also im Wesentlichen dazu dienen, die Fokusübergangs-Betriebsart auszulösen, wobei nachfolgend ein automatischer Übergang der Fokuslage von dem Start-Soll-Wert zu dem Ziel-Soll-Wert gemäß einem vorbestimmten Verlauf erfolgt. Dieser vorbestimmte Verlauf kann insbesondere von der Steuereinrichtung gesteuert werden, ohne dass eine weitere Aktivität des Benutzers erforderlich ist. Auch bei dieser generellen zweiten Ausführungsform kann einer der beiden Soll-Werte der Fokuslage dem Entfernungsmesssignal der zugeordneten Entfernungsmesseinrichtung entsprechen. Der andere der beiden Soll-Werte der Fokuslage kann dem Manuellfokuseinstellwert gemäß dem ersten Bedienelement der Bedieneinheit entsprechen (insbesondere für einen Übergang zwischen einer Manuellfokus-Betriebsart und einer Autofokus-Betriebsart), oder der andere der beiden Soll-Werte der Fokuslage kann einem weiteren Entfernungsmesssignal entsprechen (insbesondere für einen Übergang zwischen einer ersten Autofokus-Betriebsart und einer zweiten Autofokus-Betriebsart).

Bei einigen Ausführungsformen können die verschiedenen Fokuseinstell-Zwischenwerte unterschiedlich gewichteten Interpolationen zwischen dem ersten Soll-Wert der Fokuslage und dem zweiten Soll-Wert der Fokuslage entsprechen, wobei die Gewichtung der Interpolation gemäß dem vorbestimmten Verlauf des Übergangs variiert, so dass durch die Betätigung des zweiten Bedienelements automatisch ein kontinuierlicher Übergang der Einstellung der Fokuslage auslösbar ist.

Bei einigen Ausführungsformen kann der vorbestimmte Verlauf des Übergangs (bzw. der vorbestimmte Verlauf der Gewichtung der Interpolation) gemäß einer vorbestimmten Zeitdauer oder einer vorbestimmten Geschwindigkeit variieren.

Bei einigen Ausführungsformen kann der vorbestimmte Verlauf des Übergangs (bzw. der vorbestimmte Verlauf der Gewichtung der Interpolation) einer linearen Rampe entsprechen.

Bei einigen Ausführungsformen kann der vorbestimmte Verlauf des Übergangs (bzw. der vorbestimmte Verlauf der Gewichtung der Interpolation) in der Steuereinrichtung gespeichert sein.

Bei einigen Ausführungsformen kann die Steuereinrichtung dazu ausgebildet sein, mehrere verschiedene vorbestimmte Verläufe des Übergangs (bzw. der Gewichtung der Interpolation) zu speichern.

Bei einigen Ausführungsformen kann der vorbestimmte Verlauf des Übergangs Wertetabelle oder als Rechenvorschrift gespeichert sein.

Bei einigen Ausführungsformen kann die Fernsteuereinrichtung eine Schnittstelle aufweisen, über die ein gewünschter Verlauf des Übergangs (bzw. einer Gewichtung der Interpolation) von einem Benutzer programmierbar ist. Dies kann insbesondere über die bereits genannte elektronische Anzeigeeinrichtung der Bedieneinheit erfolgen.

Bei einigen Ausführungsformen kann das zweite Bedienelement relativ zu dem Basisteil zwischen einer vorbestimmten Anzahl von diskreten Auswahlpositionen beweglich sein, insbesondere zwischen zwei oder drei diskreten Auswahlpositionen. Bei einigen Ausführungsformen kann das zweite Bedienelement einen Druckknopf, eine Taste, einen Schiebeschalter oder ein virtuelles Bedienelement einer elektronischen Anzeigeeinrichtung umfassen.

Die Erfindung wird im Folgenden rein beispielhaft anhand von Ausführungsbeispielen unter Bezugnahme auf die Zeichnungen erläutert.

Es zeigen
- Fig. 1: eine schematische Darstellung einer Bewegtbildkamera mit Objektiv-Stellmotoren,
- Fig. 2: eine Darstellung einer Fernsteuereinrichtung zum Erzeugen von Steuerbefehlen für die Bewegtbildkamera gemäß Fig. 1, und
- Fig. 3: ein schematisches Schaltbild von Teilen der Fernsteuereinrichtung gemäß Fig. 2.

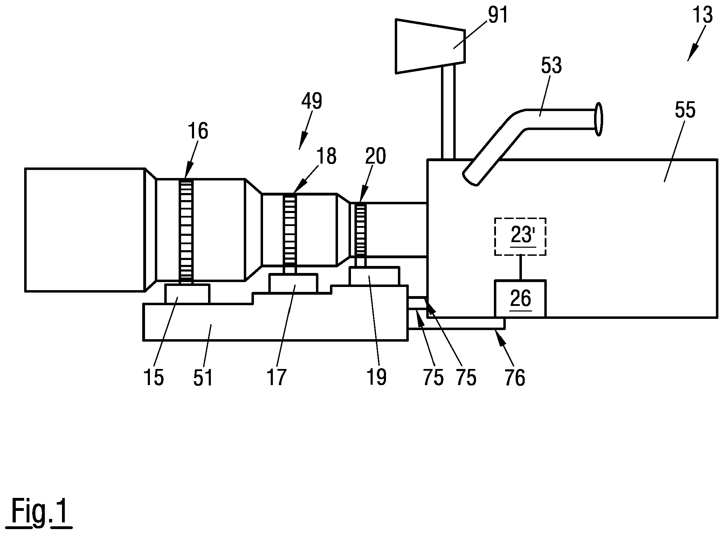

Fig. 1 zeigt eine Bewegtbildkamera 13 mit einem Kamerakörper 55, an welchem ein Wechselobjektiv 49 befestigt ist. Durch die Ausbildung der Bewegtbildkamera 13 mit einem Wechselobjektiv 49 können insbesondere auch andersartige Objektive mit dem Kamerakörper 55 verbunden werden. Das Wechselobjektiv 49 weist drei Objektivringe 16, 18 und 20 auf, mittels derer jeweilige Aufnahmeparameter der Bewegtbildkamera 13 (bzw. des Objektivs 49) eingestellt werden können. Beispielsweise kann der erste Objektivring 16 dazu vorgesehen sein, durch Drehungen die Fokuslage des Wechselobjektivs 49 anzupassen, während mittels des zweiten Objektivrings 18 beispielsweise die Brennweite einstellbar sein kann. Der Objektivring 20 kann beispielsweise dazu vorgesehen sein, die Irisblendenöffnung anzupassen. Um die Objektivringe 16, 18 und 20 verstellen zu können, sind jeweilige Objektiv-Stellmotoren 15, 17 und 19 vorgesehen. Diese Stellmotoren 15, 17 und 19 sind auf einer Objektivring-Antriebseinheit 51 angeordnet, welche über zwei Haltestangen 75 mechanisch und über eine Signalleitung 76 signaltechnisch mit dem Kamerakörper 55 verbunden ist. Der dem Objektivring 16 zugeordnete Stellmotor wird im Folgenden als Objektiv-Fokusstellmotor 15 bezeichnet.

Um eine mittels des Wechselobjektivs 49 erzeugte Abbildung des Objektraums auf einen Bildsensor der Bewegtbildkamera 13 (nicht gezeigt) und damit die korrekte Ausrichtung der Bewegtbildkamera 13 überprüfen zu können, ist an dem Kamerakörper 55 ferner ein Sucher 53 angeordnet.

An dem Kamerakörper 55 ist weiterhin eine Entfernungsmesseinrichtung 91 angeordnet, die in Richtung des Objektraums weist und die dazu ausgebildet ist, die Entfernung zu einem Motiv innerhalb des Objektraums zu messen. Die Entfernungsmesseinrichtung 91 erzeugt ein entsprechendes Entfernungsmesssignal. Die Messung der Entfernung kann nach einem bekannten Prinzip erfolgen, beispielsweise durch Laufzeitmessung oder Messung einer Phasenverschiebung, insbesondere mittels Ultraschall oder elektromagnetische Wellen (z.B. Light detection and ranging, LIDAR). Die Entfernungsmesseinrichtung 91 muss nicht, wie gezeigt, direkt mit der Bewegtbildkamera 13 verbunden sein, sondern kann auch an einer anderen Stelle des Raums angeordnet sein, beispielsweise auf einem Stativ. Die Position und die Ausrichtung der jeweiligen Entfernungsmesseinrichtung 91 relativ zu der Bewegtbildkamera 13 müssen bekannt sein, damit (zumindest indirekt) eine Entfernung zwischen dem Motiv und der Bewegtbildkamera 13 (insbesondere einer Bildebene der Bewegtbildkamera 13) gemessen werden kann. Die Entfernungsmesseinrichtung 91 kann auch in die Bewegtbildkamera 13 integriert sein (beispielsweise bei einer bildsensorbasierten Entfernungsmessung). Zusätzlich kann vorgesehen sein, dass eine Entfernung zwischen der Bewegtbildkamera 13 und einem weiteren Motiv innerhalb des Objektraums gemessen und ein entsprechendes weiteres Entfernungsmesssignal (direkt oder indirekt) erzeugt wird, wobei dies mittels der Entfernungsmesseinrichtung 91 oder mittels einer weiteren Entfernungsmesseinrichtung (nicht gezeigt) erfolgen kann.

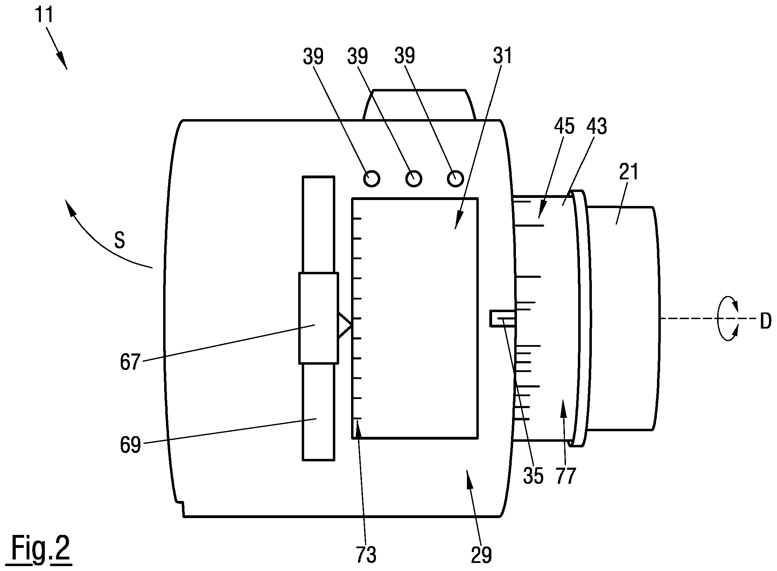

Während einer Aufnahme einer Bewegtbildsequenz mittels einer solchen Bewegtbildkamera 13 kann vorgesehen sein, die Anpassung der genannten Aufnahmeparameter durch Einstellen der Objektivringe 16, 18 und 20 ferngesteuert durchzuführen, sodass sich ein Kameramann ausschließlich auf die korrekte Ausrichtung der Bewegtbildkamera 13 konzentrieren kann. Die Einstellung der Parameter der Bewegtbildkamera 13 kann dabei durch eine weitere Person, insbesondere einen Kameraassistenten oder einen Schärfezieher, mittels einer Fernsteuereinrichtung erfolgen, über die der Benutzer Steuerbefehle S für die jeweiligen Objektiv-Stellmotoren 15, 17 und 19 einstellen und an die Bewegtbildkamera 13 übermitteln kann. Eine mögliche Ausführungsform einer solchen Fernsteuereinrichtung für die Bewegtbildkamera 13 ist in Fig. 2 gezeigt.

Die in Fig. 2 gezeigte Fernsteuereinrichtung umfasst eine tragbare Bedieneinheit 11. Die Bedieneinheit 11 weist ein Basisteil 29 und ein relativ zu dem Basisteil 29 um eine Drehachse D drehbares erstes Bedienelement 21 auf, mittels dessen Steuerbefehle für die Bewegtbildkamera 13 bzw. für zumindest einen der Objektiv-Stellmotoren 15, 17 und 19 eingestellt werden können. Das erste Bedienelement 21 ist hierfür relativ zu dem Basisteil 29 kontinuierlich variabel beweglich. Die Steuerbefehle entsprechen dabei insbesondere einem jeweiligen Soll-Wert, auf welchen der von dem jeweiligen Objektivring 16, 18 oder 20 beeinflusste Aufnahmeparameter einzustellen ist. In einer Manuellfokus-Betriebsart der Fernsteuereinrichtung kann die Fernsteuereinrichtung in Abhängigkeit von der Einstellposition des ersten Bedienelements 21 einen Manuellfokuseinstellwert als Steuerbefehl S bzw. Soll-Wert für den Objektiv-Fokusstellmotor 15 (Fig. 1) bestimmen und ausgeben.

Mit dem ersten Bedienelement 21 ist ein Kennzeichnungsring 43 drehfest verbunden, welcher an seiner Außenseite 77 eine Kennzeichnung 45 in Form einer Skala trägt. An der Kennzeichnung 45 sind die einstellbaren Steuerbefehle S bzw. Werte des beeinflussten Parameters der Bewegtbildkamera 13 ablesbar (z.B. Fokuslage). Um den eingestellten Steuerbefehl bzw. die Drehstellung des Bedienelements 21 anzeigen zu können, ist an dem Basisteil 29 eine Stellwertmarkierung 35 angebracht.

Um die mittels der Bedieneinheit 11 vorgenommenen Einstellungen weiter überprüfen oder anpassen zu können, weist das Basisteil 29 der Fernsteuereinrichtung eine elektronische Anzeigeeinrichtung 31 auf. Diese Anzeigeeinrichtung 31 stellt mittels einer Anzeige 73 Informationen für einen Benutzer bereit, die beispielsweise einen weiteren Aufnahmeparameter der Bewegtbildkamera 13 oder eine Auswahlmöglichkeit zur Einstellung der Fernsteuereinrichtung selbst betreffen können. Ferner ist ein in einer Führung 69 kontinuierlich variabel geführter Schieberegler 67 vorgesehen, mittels dessen beispielsweise durch die Anzeige 73 angezeigte Einstellungen ausgewählt werden können. Insbesondere kann der Schieberegler 67 dazu dienen, in einer Blendeneinstell-Betriebsart Blendeneinstellwerte für den Objektiv-Stellmotor 19 zu bestimmen, um entsprechende Befehle zum Steuern Irisblendenöffnung gemäß dem Objektivring 20 auszugeben.

Darüber hinaus weist das Basisteil 29 drei Tasten 39 auf, um ebenfalls Steuerbefehle eingeben oder Einstellungen an der Fernsteuereinrichtung selbst oder der Bewegtbildkamera 13 vornehmen zu können. Beispielsweise kann es vorgesehen sein, mittels einer der Tasten 39 die Bewegtbildkamera 13 wahlweise ein- oder auszuschalten oder eine Aufnahme zu starten oder zu unterbrechen.

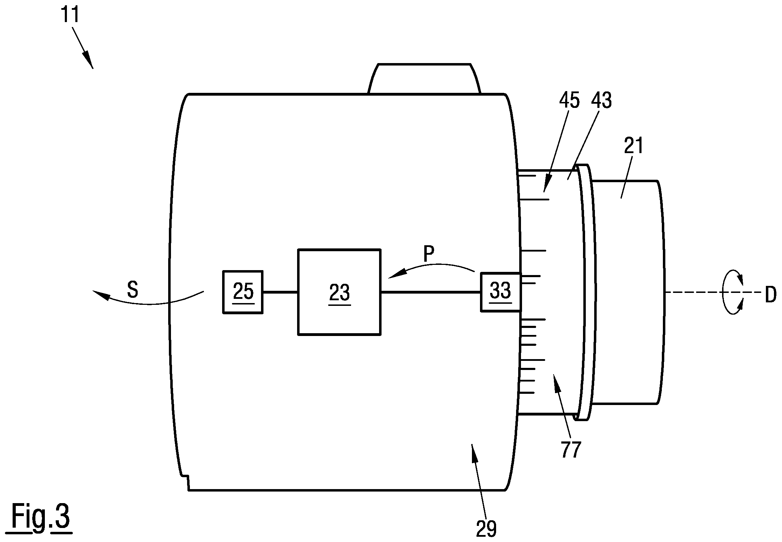

Wie das Schaltbild gemäß Fig. 3 zeigt, weist die Bedieneinheit 11 einen Positionsgeber 33 auf, mittels dessen die Einstellposition des ersten Bedienelementes 21 relativ zu dem Basisteil 29 bestimmt und ein entsprechendes Positionssignal P erzeugt werden kann. Der Positionsgeber 33 ist mit einer Steuereinrichtung 23 verbunden. Die Steuereinrichtung 23 ist dazu ausgebildet, anhand einer Zuordnungsvorschrift einen dem jeweiligen Positionssignal P entsprechenden Einstellwert zu ermitteln, der beispielsweise dem genannten Manuellfokuseinstellwert entsprechen kann. Ein entsprechender Positionsgeber kann auch für den Schieberegler 67 gemäß Fig. 2 vorgesehen sein.

Die Steuereinrichtung 23 ist mit einer Schnittstelle 25 verbunden, um Steuerbefehle an die Bewegtbildkamera 13 bzw. an den jeweiligen Objektiv-Stellmotor 15, 17 oder 19 senden zu können. Der jeweilige Steuerbefehl kann einem ermittelten Einstellwert entsprechen oder lediglich indirekt hieraus abgeleitet sein. In dem gezeigten Ausführungsbeispiel ist die Schnittstelle 25 mit einem Funkmodul für ein drahtloses Übermitteln der Steuerbefehle ausgebildet, wobei grundsätzlich auch eine kabelgebundene Übermittlung vorgesehen sein kann. An der Bewegtbildkamera 13 (Fig. 1) ist eine entsprechende Schnittstelle 26 vorgesehen, um die Steuerbefehle zu empfangen und an die Objektiv-Stellmotoren 15, 17 oder 19 weiterzuleiten (insbesondere über die Signalleitung 76 und/oder die Objektivring-Antriebseinheit 51). Die Schnittstelle 25 der Bedieneinheit 29 kann auch als Eingang dienen, beispielsweise um Entfernungsmesssignale der Entfernungsmesseinrichtung 91 oder Ist-Werte einer eingestellten Fokuslage zu empfangen. Demensprechend kann die Schnittstelle 26 der Bewegtbildkamera 13 auch als Ausgang dienen, um entsprechende Signale auszusenden.

Bei dem in Fig. 3 gezeigten Ausführungsbeispiel der Fernsteuereinrichtung ist die Steuereinrichtung 23 in das Basisteil 19 der Bedieneinheit 11 integriert. Alternativ hierzu kann auch ein modularer Aufbau der Fernsteuereinrichtung vorgesehen sein, bei dem die Steuereinrichtung 23 teilweise separat von der Bedieneinheit 11 ausgebildet und in oder an der Bewegtbildkamera 13 angeordnet ist. Somit kann das endgültige Ermitteln von Soll-Werten für die Objektiv-Stellmotoren 15, 17 und 19 seitens der Bewegtbildkamera 13 erfolgen. Dies ist in Fig. 1 durch den dort befindlichen Teil 23' der Steuereinrichtung illustriert (gestrichelt dargestellt), welcher über die Empfangseinrichtung 26 die erforderlichen Steuerbefehle und Werte von der Schnittstelle 25 der Bedieneinheit 11 erhält.

Die Fernsteuereinrichtung kann, wie erläutert, dazu dienen, in einer Manuellfokus-Betriebsart in Abhängigkeit von der Einstellposition des ersten Bedienelements 21 einen Manuellfokuseinstellwert als händisch vorgegebenen Soll-Wert für den Objektiv-Fokusstellmotor 15 zu bestimmen und an den Objektiv-Fokusstellmotor 15 bzw. die Objektivring-Antriebseinheit 51 auszugeben. Die Steuereinrichtung 23 der Fernsteuereinrichtung (einschließlich des optionalen Teils 23') ist ferner dazu ausgebildet ist, in Abhängigkeit von einer Betätigung eines zweiten Bedienelements der Bedieneinheit 11 in einer Fokusübergangs-Betriebsart den Objektiv-Fokusstellmotor 15 zum Einstellen der Fokuslage gemäß einer Abfolge von mehreren verschiedenen Fokuseinstell-Zwischenwerten zu veranlassen, die sich ausgehend von einem ersten Soll-Wert der Fokuslage einem zweiten Soll-Wert der Fokuslage annähern, wobei der erste Soll-Wert oder der zweite Soll-Wert der Fokuslage dem Entfernungsmesssignal der Entfernungsmesseinrichtung 91 entspricht. Das zweite Bedienelement kann beispielsweise durch den Schieberegler 67 oder durch eine der Tasten 39 (Fig. 2) gebildet sein.

Die Fernsteuereinrichtung ermöglicht somit zum einen ein händisches Fokussieren durch Bewegen des ersten Bedienelements 21 relativ zu dem Basisteil 29 der Bedieneinheit 11. Ergänzend kann der Benutzer mittels des zweiten Bedienelements (z.B. Schieberegler 67 oder Taste 39) bewirken, dass die Steuereinrichtung 23 den Objektiv-Fokusstellmotor 15, ausgehend von einem bereits eingestellten ersten Soll-Wert, zum Einstellen der Fokuslage gemäß einer Abfolge einer Vielzahl von Fokuseinstell-Zwischenwerten veranlasst, wobei diese Abfolge die eingestellte jeweilige Fokuslage an einen zweiten Soll-Wert annähert, der zu Beginn der Fokusübergangs-Betriebsart bereits zumindest im Wesentlichen feststeht. Hierdurch kann ein kontinuierlicher oder im Wesentlichen kontinuierlicher Übergang zwischen dem ersten Soll-Wert und dem zweiten Soll-Wert der Fokuslage bewirkt werden. Die Fokuseinstell-Zwischenwerte können insbesondere einer variabel gewichteten Interpolation zwischen dem ersten Soll-Wert der Fokuslage und dem zweiten Soll-Wert der Fokuslage entsprechen Die Fokusübergangs-Betriebsart der Fernsteuereinrichtung kann somit insbesondere für einen Übergang zwischen der Manuellfokus-Betriebsart und einer Autofokus-Betriebsart (automatisches Fokussieren gemäß der Entfernungsmesseinrichtung) dienen, oder für einen Übergang zwischen verschiedenen Autofokus-Betriebsarten (wie nachfolgend noch erläutert wird). Durch eine derartige Fokusübergangs-Betriebsart der Fernsteuereinrichtung wird bei einem Wechsel von einem ersten Soll-Wert zu einem zweiten Soll-Wert der Fokuslage, insbesondere bei einem Wechsel der Quelle für den jeweiligen Soll-Wert, ein sanfter Übergang ermöglicht.

Gemäß einem ersten Ausführungsbeispiel kann der Schieberegler 67 (Fig. 2) als das zweite Bedienelement dienen, wobei die Steuereinrichtung 23 dazu ausgebildet ist, in Abhängigkeit von der jeweiligen Zwischenposition des Schiebereglers 67 einen jeweiligen Übergangseinstellwert zu bestimmen, wobei die Steuereinrichtung 23 die Fokuseinstell-Zwischenwerte in Abhängigkeit von dem jeweiligen Übergangseinstellwert bestimmt und als aktuelle Soll-Werte der Fokuslage (direkt oder indirekt) an den Objektiv-Fokusstellmotor 15 übermittelt.

Hierfür kann vorgesehen sein, dass ein Entfernungsmesssignal der Entfernungsmesseinrichtung 91 (Fig. 1) und ein mittels des ersten Bedienelements 21 ausgewählter Manuellfokuseinstellwert als erster Soll-Wert und zweiter Soll-Wert dienen, oder umgekehrt. Bei diesem Ausführungsbeispiel kann die Steuereinrichtung 23
- in dem Fall, dass der Schieberegler 67 an einen ersten Endanschlag der Führung 69 bewegt ist, den Objektiv-Fokusstellmotor 15 zum Einstellen der Fokuslage gemäß dem Entfernungsmesssignal der Entfernungsmesseinrichtung 91 (Fig. 1) veranlassen;
- in dem Fall, dass der Schieberegler 67 an einen zweiten Endanschlag der Führung 69 bewegt ist, den Objektiv-Fokusstellmotor 15 zum Einstellen der Fokuslage gemäß dem Manuellfokuseinstellwert veranlassen, wobei der Manuellfokuseinstellwert insbesondere bereits vor oder zu Beginn der Fokusübergangs-Betriebsart mittels des ersten Bedienelements 21 eingestellt worden sein kann; und
- in dem Fall, dass der Schieberegler 67 in eine Zwischenposition bewegt ist, den Objektiv-Fokusstellmotor 15 zum Einstellen der Fokuslage gemäß dem jeweils bestimmten Fokuseinstell-Zwischenwert veranlassen.

Gemäß einem ähnlichen, zweiten Ausführungsbeispiel kann der Schieberegler 67 wiederum als das zweite Bedienelement dienen, wobei jedoch ein Entfernungsmesssignal der Entfernungsmesseinrichtung 91 (Fig. 1) und ein anderes Entfernungsmesssignal der Entfernungsmesseinrichtung 91 oder einer anderen Entfernungsmesseinrichtung als erster Soll-Wert und zweiter Soll-Wert dienen, oder umgekehrt. Bei einem solchen Ausführungsbeispiel kann die Steuereinrichtung 23
- in dem Fall, dass der Schieberegler 67 an einen ersten Endanschlag der Führung 69 bewegt ist, den Objektiv-Fokusstellmotor 15 zum Einstellen der Fokuslage gemäß dem Entfernungsmesssignal der Entfernungsmesseinrichtung 91 veranlassen;
- in dem Fall, dass der Schieberegler 67 an einen zweiten Endanschlag der Führung 69 bewegt ist, den Objektiv-Fokusstellmotor 15 zum Einstellen der Fokuslage gemäß einem anderen Entfernungsmesssignal veranlassen; und
- in dem Fall, dass der Schieberegler 67 in eine Zwischenposition bewegt ist, den Objektiv-Fokusstellmotor 15 zum Einstellen der Fokuslage gemäß dem jeweils bestimmten Fokuseinstell-Zwischenwert veranlassen.

Gemäß einem dritten Ausführungsbeispiel kann eine der Tasten 39 (Fig. 2) als das zweite Bedienelement dienen, wobei eine Betätigung der Taste 39 die Fokusübergangs-Betriebsart auslöst. Bei einem solchen Ausführungsbeispiel kann die Steuereinrichtung 23 dazu ausgebildet sein, in der Fokusübergangs-Betriebsart den Objektiv-Fokusstellmotor 15 zum Einstellen der Fokuslage gemäß der Abfolge von mehreren verschiedenen Fokuseinstell-Zwischenwerte, insbesondere automatisch, gemäß einem vorbestimmten Verlauf des Übergangs zwischen dem ersten Soll-Wert der Fokuslage und dem zweiten Soll-Wert der Fokuslage zu veranlassen. Dieser vorbestimmte Verlauf kann von der Steuereinrichtung beispielsweise gemäß einer gespeicherten Wertetabelle oder Rechenvorschrift gesteuert werden. Der vorbestimmte Verlauf des Übergangs kann beispielsweise gemäß einer vorbestimmten Zeitdauer oder einer vorbestimmten Geschwindigkeit variieren.

Auch bei diesem Ausführungsbeispiel kann einer der beiden Soll-Werte der Fokuslage dem Entfernungsmesssignal der Entfernungsmesseinrichtung 91 entsprechen, und der andere der beiden Soll-Werte der Fokuslage kann dem Manuellfokuseinstellwert gemäß dem ersten Bedienelement 21 der Bedieneinheit oder einem weiteren Entfernungsmesssignal entsprechen.

Die Fokusübergangs-Betriebsart der Fernsteuereinrichtung ermöglicht somit einen sanften Übergang von einem ersten Soll-Wert zu einem zweiten Soll-Wert der an dem Objektiv 49 eingestellten Fokuslage.

### Bezugszeichenliste

- 11: Bedieneinheit
- 13: Bewegtbildkamera
- 15: erster Objektiv-Stellmotor
- 16: erster Objektivring
- 17: zweiter Objektiv-Stellmotor
- 18: zweiter Objektivring
- 19: dritter Objektiv-Stellmotor
- 20: dritter Objektivring
- 21: Bedienelement
- 23: Steuereinrichtung
- 23': Steuereinrichtung
- 25: Schnittstelle
- 26: Schnittstelle
- 29: Basisteil
- 31: Anzeigeeinrichtung
- 33: Positionsgeber
- 35: Stellwertmarkierung
- 39: Taste
- 43: Kennzeichnungsring
- 45: Kennzeichnung
- 49: Wechselobjektiv
- 51: Objektivring-Antriebseinheit
- 53: Sucher
- 55: Kamerakörper
- 67: Schieberegler
- 69: Führung
- 73: Anzeige
- 75: Haltestange
- 76: Signalleitung
- 91: Entfernungsmesseinrichtung

- D: Drehachse
- P: Positionssignal
- S: Steuerbefehl

## Patentansprüche

1. Fernsteuereinrichtung für eine Bewegtbildkamera (13), die ein Objektiv (49) und wenigstens einen Objektiv-Fokusstellmotor (15) zum Einstellen einer Fokuslage des Objektivs (49) aufweist und der wenigstens eine Entfernungsmesseinrichtung (91) zum Bestimmen eines Entfernungsmesssignals zugeordnet ist, mit einer tragbaren Bedieneinheit (11), wobei die Bedieneinheit (11):
- ein Basisteil (29),
- ein erstes Bedienelement (21), das relativ zu dem Basisteil (29) in eine kontinuierlich variable Einstellposition beweglich ist, und
- ein zweites Bedienelement (39, 67) aufweist,
wobei die Fernsteuereinrichtung eine Steuereinrichtung (23) aufweist, die dazu ausgebildet ist, in Abhängigkeit von der kontinuierlich variablen Einstellposition des ersten Bedienelements (21) einen Manuellfokuseinstellwert für den Objektiv-Fokusstellmotor (15) zu bestimmen und in einer Manuellfokus-Betriebsart den Manuellfokuseinstellwert auszugeben; und
wobei die Steuereinrichtung (23) ferner dazu ausgebildet ist, in Abhängigkeit von einer Betätigung des zweiten Bedienelements (39, 67) der Bedieneinheit (11) in einer Fokusübergangs-Betriebsart den Objektiv-Fokusstellmotor (15) zum Einstellen der Fokuslage gemäß einer Abfolge von mehreren verschiedenen Fokuseinstell-Zwischenwerten zu veranlassen, die sich ausgehend von einem ersten Soll-Wert der Fokuslage einem zweiten Soll-Wert der Fokuslage annähern, wobei der erste Soll-Wert oder der zweite Soll-Wert der Fokuslage dem Entfernungsmesssignal der Entfernungsmesseinrichtung (91) entspricht,
**dadurch gekennzeichnet, dass**
die Steuereinrichtung (23) dazu ausgebildet ist, die Fokuseinstell-Zwischenwerte zu bestimmen und auszugeben, um den Objektiv-Fokusstellmotor (15) zu steuern, dass
die Abfolge der mehreren verschiedenen Fokuseinstell-Zwischenwerte einer kontinuierlichen oder im Wesentlichen kontinuierlichen Annäherung der Fokuslage von dem ersten Soll-Wert an den zweiten Soll-Wert entspricht und dass die verschiedenen Fokuseinstell-Zwischenwerte einer jeweiligen Interpolation, insbesondere unterschiedlich gewichteten Interpolationen, zwischen dem ersten Soll-Wert der Fokuslage und dem zweiten Soll-Wert der Fokuslage entsprechen.

2. Fernsteuereinrichtung nach Anspruch 1,
wobei der eine von erstem und zweitem Soll-Wert der Fokuslage dem Entfernungsmesssignal der Entfernungsmesseinrichtung (91) entspricht, und wobei der andere von erstem und zweiten Soll-Wert der Fokuslage dem Manuellfokuseinstellwert oder einem weiteren Entfernungsmesssignal entspricht.

3. Fernsteuereinrichtung nach Anspruch 1 oder 2,
wobei der zweite Soll-Wert der Fokuslage zu Beginn der Fokusübergangs-Betriebsart festgelegt ist, oder
wobei der zweite Soll-Wert der Fokuslage zu Beginn der Fokusübergangs-Betriebsart vorläufig definiert ist und während der Fokusübergangs-Betriebsart anpassbar ist.

4. Fernsteuereinrichtung nach einem der vorhergehenden Ansprüche, wobei die Steuereinrichtung (23) vollständig in die Bedieneinheit (11) integriert ist, oder
wobei ein Teil (23) der Steuereinrichtung in die Bedieneinheit (11) integriert ist und ein anderer Teil (23') der Steuereinrichtung an der Bewegtbildkamera (13) angeordnet ist.

5. Fernsteuereinrichtung nach einem der vorhergehenden Ansprüche, wobei das erste Bedienelement (21) relativ zu dem Basisteil (29) der Bedieneinheit (11) drehbar ist,
und/oder
wobei das Basisteil (29) der Bedieneinheit (11) einen Positionsgeber (33) aufweist, welcher dazu ausgebildet ist, die kontinuierlich variable Einstellposition des ersten Bedienelementes (21) relativ zu dem Basisteil (29) zu erfassen und ein entsprechendes Positionssignal (P) zu erzeugen, wobei die Steuereinrichtung (23) dazu ausgebildet ist, in Abhängigkeit von dem Positionssignal (P) den Manuellfokuseinstellwert zu bestimmen;
und/oder
wobei das Basisteil (29) der Bedieneinheit (11) eine elektronische Anzeigeeinrichtung (31) zum Anzeigen von Soll-Werten und/oder Ist-Werten der Fokuslage des Objektivs (49) aufweist;
und/oder
wobei die Bedieneinheit (11) eine Schnittstelle (25) zur Kommunikation mit der Bewegtbildkamera (13) aufweist.

6. Fernsteuereinrichtung nach einem der vorhergehenden Ansprüche, wobei das zweite Bedienelement (67) relativ zu dem Basisteil (29) der Bedieneinheit (11) zwischen einer ersten Steuerposition und einer zweiten Steuerposition in kontinuierlich variable Zwischenpositionen beweglich ist, wobei die Steuereinrichtung (23) dazu ausgebildet ist, in Abhängigkeit von der jeweiligen Zwischenposition des zweiten Bedienelements (67) einen jeweiligen Übergangseinstellwert zu bestimmen, wobei die Fokuseinstell-Zwischenwerte von dem jeweiligen Übergangseinstellwert abhängen,
wobei die erste Steuerposition insbesondere einem ersten Endanschlag des zweiten Bedienelements (67) entspricht und wobei die zweite Steuerposition insbesondere einem zweiten Endanschlag des zweiten Bedienelements (67) entspricht;
und/oder
wobei das Basisteil (29) insbesondere einen Positionsgeber aufweist, welcher dazu ausgebildet ist, eine Einstellposition des zweiten Bedienelementes (67) relativ zu dem Basisteil (29) zu erfassen und ein entsprechendes Positionssignal zu erzeugen, wobei die Steuereinrichtung (23) dazu ausgebildet ist, in Abhängigkeit von dem Positionssignal den jeweiligen Übergangseinstellwert zu bestimmen;
und/oder
wobei die Steuereinrichtung (23) insbesondere dazu ausgebildet ist, in einer von der Fokusübergangs-Betriebsart verschiedenen Blendeneinstell-Betriebsart in Abhängigkeit von den kontinuierlich variablen Zwischenpositionen des zweiten Bedienelements (67) Blendeneinstellwerte für einen Objektiv-Blendenstellmotor (19) der Bewegtbildkamera (13) zu bestimmen und auszugeben.

7. Fernsteuereinrichtung nach Anspruch 6,
wobei die Steuereinrichtung (23) dazu ausgebildet ist,
- in dem Fall, dass das zweite Bedienelement (67) in die erste Steuerposition bewegt ist, den Objektiv-Fokusstellmotor (15) zum Einstellen der Fokuslage gemäß dem Entfernungsmesssignal der Entfernungsmesseinrichtung (91) zu veranlassen;
- in dem Fall, dass das zweite Bedienelement (67) in die zweite Steuerposition bewegt ist, den Objektiv-Fokusstellmotor (15) zum Einstellen der Fokuslage gemäß dem Manuellfokuseinstellwert zu veranlassen; und
- in dem Fall, dass das zweite Bedienelement (67) in eine der kontinuierlich variablen Zwischenpositionen bewegt ist, den Objektiv-Fokusstellmotor (15) zum Einstellen der Fokuslage gemäß dem jeweiligen Fokuseinstell-Zwischenwert zu veranlassen.

8. Fernsteuereinrichtung nach Anspruch 7,
wobei die Fokuseinstell-Zwischenwerte einer Interpolation zwischen dem Entfernungsmesssignal der Entfernungsmesseinrichtung (91) und dem Manuellfokuseinstellwert gemäß der Einstellposition des ersten Bedienelements (21) entsprechen;
und/oder
wobei die Steuereinrichtung (23) dazu ausgebildet ist, das Entfernungsmesssignal der Entfernungsmesseinrichtung (91) zu empfangen; die Fokuseinstell-Zwischenwerte in Abhängigkeit von dem Manuellfokuseinstellwert, dem Entfernungsmesssignal und dem jeweiligen Übergangseinstellwert zu bestimmen; und die Fokuseinstell-Zwischenwerte auszugeben.

9. Fernsteuereinrichtung nach einem der Ansprüche 6 bis 8,
wobei die Steuereinrichtung (23) dazu ausgebildet ist,
- in dem Fall, dass das zweite Bedienelement (67) in die erste Steuerposition bewegt ist, den Objektiv-Fokusstellmotor (15) zum Einstellen der Fokuslage gemäß dem Entfernungsmesssignal der Entfernungsmesseinrichtung (91) zu veranlassen;
- in dem Fall, dass das zweite Bedienelement (67) in die zweite Steuerposition bewegt ist, den Objektiv-Fokusstellmotor (15) zum Einstellen der Fokuslage gemäß einem weiteren Entfernungsmesssignal zu veranlassen; und
- in dem Fall, dass das zweite Bedienelement (67) in eine der kontinuierlich variablen Zwischenpositionen bewegt ist, den Objektiv-Fokusstellmotor (15) zum Einstellen der Fokuslage gemäß dem jeweiligen Fokuseinstell-Zwischenwert zu veranlassen.

10. Fernsteuereinrichtung nach Anspruch 9,
wobei die Fokuseinstell-Zwischenwerte einer Interpolation zwischen dem Entfernungsmesssignal der Entfernungsmesseinrichtung (91) und dem weiteren Entfernungsmesssignal entsprechen;
und/oder
wobei die Steuereinrichtung (23) dazu ausgebildet ist, das Entfernungsmesssignal der Entfernungsmesseinrichtung (91) und das weitere Entfernungsmesssignal zu empfangen; die Fokuseinstell-Zwischenwerte in Abhängigkeit von dem Entfernungsmesssignal, dem weiteren Entfernungsmesssignal und dem jeweiligen Übergangseinstellwert zu bestimmen; und die Fokuseinstell-Zwischenwerte auszugeben.

11. Fernsteuereinrichtung nach einem der Ansprüche 1 bis 5,
wobei die Fokusübergangs-Betriebsart durch die Betätigung des zweiten Bedienelements (39) der Bedieneinheit (11) auslösbar ist, wobei die Steuereinrichtung (23) dazu ausgebildet ist, in der Fokusübergangs-Betriebsart den Objektiv-Fokusstellmotor (15) zum Einstellen der Fokuslage gemäß der Abfolge von mehreren verschiedenen Fokuseinstell-Zwischenwerte in einem vorbestimmten Verlauf des Übergangs zwischen dem ersten Soll-Wert der Fokuslage und dem zweiten Soll-Wert der Fokuslage zu veranlassen.

12. Fernsteuereinrichtung nach Anspruch 11,
wobei die verschiedenen Fokuseinstell-Zwischenwerte unterschiedlich gewichteten Interpolationen zwischen dem ersten Soll-Wert der Fokuslage und dem zweiten Soll-Wert der Fokuslage entsprechen, wobei die Gewichtung der Interpolation gemäß dem vorbestimmten Verlauf des Übergangs variiert, so dass durch die Betätigung des zweiten Bedienelements (39) automatisch ein kontinuierlicher Übergang der Einstellung der Fokuslage auslösbar ist;
und/oder
wobei der vorbestimmte Verlauf des Übergangs gemäß einer vorbestimmten Zeitdauer oder einer vorbestimmten Geschwindigkeit variiert;
und/oder
wobei der vorbestimmte Verlauf des Übergangs einer linearen Rampe entspricht.

13. Fernsteuereinrichtung nach Anspruch 11 oder 12,
wobei der vorbestimmte Verlauf des Übergangs in der Steuereinrichtung (23) gespeichert ist;
und/oder
wobei die Steuereinrichtung (23) dazu ausgebildet ist, mehrere verschiedene vorbestimmte Verläufe des Übergangs zu speichern;
und/oder
wobei die Fernsteuereinrichtung eine Schnittstelle (31) aufweist, über die ein gewünschter Verlauf des Übergangs zwischen dem ersten Soll-Wert der Fokuslage und dem zweiten Soll-Wert der Fokuslage von einem Benutzer programmierbar ist;
und/oder
wobei das zweite Bedienelement relativ zu dem Basisteil (29) zwischen einer vorbestimmten Anzahl von diskreten Auswahlpositionen beweglich ist.

## Claims

1. A remote control device for a motion picture camera (13) which has a lens (49) and at least one lens focus setting motor (15) for setting a focus distance of the lens (49) and with which at least one distance measurement device (91) for determining a distance measurement signal is associated, said remote control device comprising a portable operating unit (11), wherein the operating unit (11) has:
- a base part (29),
- a first operating element (21) which is movable relative to the base part (29) into a continuously variable setting position, and
- a second operating element (39, 67),
wherein the remote control device has a control device (23) which is configured to determine a manual focus setting value for the lens focus setting motor (15) in dependence on the continuously variable setting position of the first operating element (21) and to output the manual focus setting value in a manual focus operating mode; and
wherein the control device (23) is further configured, in dependence on an actuation of the second operating element (39, 67) of the operating unit (11), to cause the lens focus setting motor (15) in a focus transition operating mode to set the focus distance in accordance with a sequence of a plurality of different intermediate focus setting values which converge to a second desired value of the focus distance starting from a first desired value of the focus distance, wherein the first desired value or the second desired value of the focus distance corresponds to the distance measurement signal of the distance measurement device (91), **characterized in that**
the control device (23) is configured to determine and to output the intermediate focus setting values in order to control the lens focus setting motor (15),
**in that** the sequence of the plurality of different intermediate focus setting values corresponds to a continuous or substantially continuous convergence of the focus distance from the first desired value to the second desired value, and
**in that** the different intermediate focus setting values correspond to a respective interpolation, in particular differently weighted interpolations, between the first desired value of the focus distance and the second desired value of the focus distance.

2. A remote control device according to claim 1,
wherein the one of the first and second desired values of the focus distance corresponds to the distance measurement signal of the distance measurement device (91), and wherein the other of the first and second desired values of the focus distance corresponds to the manual focus setting value or to a further distance measurement signal.

3. A remote control device according to claim 1 or 2,
wherein the second desired value of the focus distance is defined at the start of the focus transition operating mode, or
wherein the second desired value of the focus distance is preliminarily defined at the start of the focus transition operating mode and is adaptable during the focus transition operating mode.

4. A remote control device according to any one of the preceding claims, wherein the control device (23) is completely integrated into the operating unit (11), or
wherein one part (23) of the control device is integrated into the operating unit (11) and another part (23') of the control device is arranged at the motion picture camera (13).

5. A remote control device according to any one of the preceding claims, wherein the first operating element (21) is rotatable relative to the base part (29) of the operating unit (11);
and/or
wherein the base part (29) of the operating unit (11) has a position encoder (33) which is configured to detect the continuously variable setting position of the first operating element (21) relative to the base part (29) and to generate a corresponding position signal (P), wherein the control device (23) is configured to determine the manual focus setting value in dependence on the position signal (P);
and/or
wherein the base part (29) of the operating unit (11) has an electronic display device (31) for displaying desired values and/or actual values of the focus distance of the lens (49);
and/or
wherein the operating unit (11) has an interface (25) for communicating with the motion picture camera (13).

6. A remote control device according to any one of the preceding claims, wherein the second operating element (67) is movable relative to the base part (29) of the operating unit (11) between a first control position and a second control position into continuously variable intermediate positions, wherein the control device (23) is configured to determine a respective transition setting value in dependence on the respective intermediate position of the second operating element (67), wherein the intermediate focus setting values depend on the respective transition setting value, wherein the first control position in particular corresponds to a first end abutment of the second operating element (67), and wherein the second control position in particular corresponds to a second end abutment of the second operating element (67);
and/or
wherein the base part (29) in particular has a position encoder which is configured to detect a setting position of the second operating element (67) relative to the base part (29) and to generate a corresponding position signal, wherein the control device (23) is configured to determine the respective transition setting value in dependence on the position signal; and/or
wherein the control device (23) is in particular configured to determine and to output aperture setting values for a lens aperture setting motor (19) of the motion picture camera (13) in an aperture setting operating mode, which is different from the focus transition operating mode, in dependence on the continuously variable intermediate positions of the second operating element (67).

7. A remote control device according to claim 6,
wherein the control device (23) is configured,
- in the case that the second operating element (67) is moved into the first control position, to cause the lens focus setting motor (15) to set the focus distance in accordance with the distance measurement signal of the distance measurement device (91);
- in the case that the second operating element (67) is moved into the second control position, to cause the lens focus setting motor (15) to set the focus distance in accordance with the manual focus setting value; and
- in the case that the second operating element (67) is moved into one of the continuously variable intermediate positions, to cause the lens focus setting motor (15) to set the focus distance in accordance with the respective intermediate focus setting value.

8. A remote control device according to claim 7,
wherein the intermediate focus setting values correspond to an interpolation between the distance measurement signal of the distance measurement device (91) and the manual focus setting value in accordance with the setting position of the first operating element (21);
and/or
wherein the control device (23) is configured to receive the distance measurement signal of the distance measurement device (91); to determine the intermediate focus setting values in dependence on the manual focus setting value, the distance measurement signal and the respective transition setting value; and to output the intermediate focus setting values.

9. A remote control device according to any one of the claims 6 to 8,
wherein the control device (23) is configured,
- in the case that the second operating element (67) is moved into the first control position, to cause the lens focus setting motor (15) to set the focus distance in accordance with the distance measurement signal of the distance measurement device (91);
- in the case that the second operating element (67) is moved into the second control position, to cause the lens focus setting motor (15) to set the focus distance in accordance with a further distance measurement signal; and
- in the case that the second operating element (67) is moved into one of the continuously variable intermediate positions, to cause the lens focus setting motor (15) to set the focus distance in accordance with the respective intermediate focus setting value.

10. A remote control device according to claim 9,
wherein the intermediate focus setting values correspond to an interpolation between the distance measurement signal of the distance measurement device (91) and the further distance measurement signal;
and/or
wherein the control device (23) is configured to receive the distance measurement signal of the distance measurement device (91) and receive the further distance measurement signal; to determine the intermediate focus setting values in dependence on the distance measurement signal, the further distance measurement signal and the respective transition setting value; and to output the intermediate focus setting values.

11. A remote control device according to any one of the claims 1 to 5,
wherein the focus transition operating mode can be triggered by the actuation of the second operating element (39) of the operating unit (11), wherein the control device (23) is configured to cause the lens focus setting motor (15) in the focus transition operating mode to set the focus distance in accordance with the sequence of a plurality of different intermediate focus setting values in a predetermined course of the transition between the first desired value of the focus distance and the second desired value of the focus distance.

12. A remote control device according to claim 11,
wherein the different intermediate focus setting values correspond to differently weighted interpolations between the first desired value of the focus distance and the second desired value of the focus distance, wherein the weighting of the interpolation varies in accordance with the predetermined course of the transition such that a continuous transition of the setting of the focus distance can be automatically triggered by the actuation of the second operating element (39);
and/or
wherein the predetermined course of the transition varies in accordance with a predetermined time duration or a predetermined speed; and/or
wherein the predetermined course of the transition corresponds to a linear ramp.

13. A remote control device according to claim 11 or 12,
wherein the predetermined course of the transition is stored in the control device (23);
and/or
wherein the control device (23) is configured to store a plurality of different predetermined courses of the transition;
and/or
wherein the remote control device has an interface (31) via which a desired course of the transition between the first desired value of the focus distance and the second desired value of the focus distance can be programmed by a user;
and/or
wherein the second operating element is movable relative to the base part (29) between a predetermined number of discrete selection positions.

## Revendications

1. Dispositif de télécommande pour une caméra à images animées (13), laquelle comprend un objectif (49) et au moins un moteur de mise au point d'objectif (15) pour régler une position focale de l'objectif (49), et à laquelle est associé au moins un dispositif de mesure de distance (91) pour déterminer un signal de mesure de distance,
comprenant une unité de manipulation portable (11), l'unité de manipulation (11) comprenant :
- une partie de base (29),
- un premier élément de manipulation (21) mobile par rapport à la partie de base (29) vers une position de réglage variable en continu, et
- un deuxième élément de manipulation (39, 67),
dans lequel
le dispositif de télécommande comprend un dispositif de commande (23) qui est conçu pour, en fonction de la position de réglage variable en continu du premier élément de manipulation (21), déterminer une valeur de mise au point manuelle pour le moteur de mise au point d'objectif (15) et pour émettre la valeur de mise au point manuelle dans un mode de mise au point manuelle ; et
le dispositif de commande (23) est en outre conçu pour, en fonction d'un actionnement du deuxième élément de manipulation (39, 67) de l'unité de manipulation (11), dans un mode de transition de mise au point, amener le moteur de mise au point d'objectif (15) à régler la position focale selon une séquence de plusieurs valeurs intermédiaires différentes de mise au point qui se rapprochent vers une deuxième valeur de consigne de la position focale à partir d'une première valeur de consigne de la position focale, la première valeur de consigne ou la deuxième valeur de consigne de la position focale correspondant au signal de mesure de distance du dispositif de mesure de distance (91),
**caractérisé en ce que**
le dispositif de commande (23) est conçu pour déterminer et émettre les valeurs intermédiaires de mise au point afin de commander le moteur de mise au point d'objectif (15),
**en ce que** la séquence de plusieurs valeurs intermédiaires différentes de mise au point correspond à un rapprochement continu ou sensiblement continu de la position focale vers la deuxième valeur de consigne à partir de la première valeur de consigne, et
**en ce que** les différentes valeurs intermédiaires de mise au point correspondent à une interpolation respective, en particulier à des interpolations pondérées différemment, entre la première valeur de consigne de la position focale et la deuxième valeur de consigne de la position focale.

2. Dispositif de télécommande selon la revendication 1,
dans lequel l'une parmi les première et deuxième valeurs de consigne de la position focale correspond au signal de mesure de distance du dispositif de mesure de distance (91), et l'autre parmi les première et deuxième valeurs de consigne de la position focale correspond à la valeur de mise au point manuelle ou à un autre signal de mesure de distance.

3. Dispositif de télécommande selon la revendication 1 ou 2,
dans lequel la deuxième valeur de consigne de la position focale est définie au début du mode de transition de mise au point, ou
la deuxième valeur de consigne de la position focale est définie provisoirement au début du mode de transition de mise au point et peut être adaptée pendant le mode de transition de mise au point.

4. Dispositif de télécommande selon l'une des revendications précédentes, dans lequel le dispositif de commande (23) est entièrement intégré dans l'unité de manipulation (11), ou
une partie (23) du dispositif de commande est intégrée dans l'unité de manipulation (11) et une autre partie (23') du dispositif de commande est disposée sur la caméra à images animées (13).

5. Dispositif de télécommande selon l'une des revendications précédentes, dans lequel le premier élément de manipulation (21) est rotatif par rapport à la partie de base (29) de l'unité de manipulation (11) ;
et/ou
la partie de base (29) de l'unité de manipulation (11) comporte un capteur de position (33) qui est conçu pour détecter la position de réglage variable en continu du premier élément de manipulation (21) par rapport à la partie de base (29) et pour générer un signal de position (P) correspondant, le dispositif de commande (23) étant conçu pour déterminer la valeur de mise au point manuelle en fonction du signal de position (P) ;
et/ou
la partie de base (29) de l'unité de manipulation (11) comprend un dispositif d'affichage électronique (31) pour afficher des valeurs de consigne et/ou des valeurs réelles de la position focale de l'objectif (49) ;
et/ou
l'unité de manipulation (11) comprend une interface (25) pour la communication avec la caméra à images animées (13).

6. Dispositif de télécommande selon l'une des revendications précédentes, dans lequel le deuxième élément de manipulation (67) est mobile par rapport à la partie de base (29) de l'unité de manipulation (11) entre une première position de commande et une deuxième position de commande dans des positions intermédiaires variables en continu, le dispositif de commande (23) étant conçu pour déterminer une valeur de réglage de transition respective en fonction de la position intermédiaire respective du deuxième élément de manipulation (67), les valeurs intermédiaires de mise au point dépendant de la valeur de réglage de transition respective ;
la première position de commande correspond en particulier à une première butée de fin de course du deuxième élément de manipulation (67), et la deuxième position de commande correspond en particulier à une deuxième butée de fin de course du deuxième élément de manipulation (67) ; et/ou
la partie de base (29) comprend en particulier un capteur de position qui est conçu pour détecter une position de réglage du deuxième élément de manipulation (67) par rapport à la partie de base (29) et pour générer un signal de position correspondant, le dispositif de commande (23) étant conçu pour déterminer la valeur de réglage de transition respective en fonction du signal de position ;
et/ou
le dispositif de commande (23) est en particulier conçu pour déterminer et émettre, dans un mode de réglage de diaphragme différent du mode de transition de mise au point, des valeurs de réglage de diaphragme pour un moteur de réglage de diaphragme d'objectif (19) de la caméra à images animées (13), en fonction des positions intermédiaires variables en continu du deuxième élément de manipulation (67).

7. Dispositif de télécommande selon la revendication 6,
dans lequel le dispositif de commande (23) est conçu pour
- dans le cas où le deuxième élément de manipulation (67) est déplacé vers la première position de commande, amener le moteur de mise au point d'objectif (15) à régler la position focale conformément au signal de mesure de distance du dispositif de mesure de distance (91) ;
- dans le cas où le deuxième élément de manipulation (67) est déplacé vers la deuxième position de commande, amener le moteur de mise au point d'objectif (15) à régler la position focale conformément à la valeur de mise au point manuelle ; et
- dans le cas où le deuxième élément de manipulation (67) est déplacé vers l'une des positions intermédiaires variables en continu, amener le moteur de mise au point d'objectif (15) à régler la position focale conformément à la valeur intermédiaire de mise au point respective.

8. Dispositif de télécommande selon la revendication 7,
dans lequel les valeurs intermédiaires de mise au point correspondent à une interpolation entre le signal de mesure de distance du dispositif de mesure de distance (91) et la valeur de mise au point manuelle conformément à la position de réglage du premier élément de manipulation (21) ; et/ou
le dispositif de commande (23) est conçu pour recevoir le signal de mesure de distance du dispositif de mesure de distance (91) ; pour déterminer les valeurs intermédiaires de mise au point en fonction de la valeur de mise au point manuelle, du signal de mesure de distance et de la valeur de réglage de transition respective ; et pour émettre les valeurs intermédiaires de mise au point.

9. Dispositif de télécommande selon l'une des revendications 6 à 8, dans lequel le dispositif de commande (23) est conçu pour
- dans le cas où le deuxième élément de manipulation (67) est déplacé vers la première position de commande, amener le moteur de mise au point d'objectif (15) à régler la position focale conformément au signal de mesure de distance du dispositif de mesure de distance (91) ;
- dans le cas où le deuxième élément de manipulation (67) est déplacé vers la deuxième position de commande, amener le moteur de mise au point d'objectif (15) à régler la position focale conformément à un autre signal de mesure de distance ; et
- dans le cas où le deuxième élément de manipulation (67) est déplacé vers l'une des positions intermédiaires variables en continu, amener le moteur de mise au point d'objectif (15) à régler la position focale conformément à la valeur intermédiaire de mise au point respective.

10. Dispositif de télécommande selon la revendication 9,
dans lequel les valeurs intermédiaires de mise au point correspondent à une interpolation entre le signal de mesure de distance du dispositif de mesure de distance (91) et l'autre signal de mesure de distance ;
et/ou
le dispositif de commande (23) est conçu pour recevoir le signal de mesure de distance du dispositif de mesure de distance (91) et l'autre signal de mesure de distance ; pour déterminer les valeurs intermédiaires de mise au point en fonction du signal de mesure de distance, de l'autre signal de mesure de distance et de la valeur de réglage de transition respective ; et pour émettre les valeurs intermédiaires de mise au point.

11. Dispositif de télécommande selon l'une des revendications 1 à 5, dans lequel le mode de transition de mise au point peut être déclenché par l'actionnement du deuxième élément de manipulation (39) de l'unité de manipulation (11), le dispositif de commande (23) étant conçu pour, dans le mode de transition de mise au point, amener le moteur de mise au point d'objectif (15) à régler la position focale conformément à la séquence de plusieurs valeurs intermédiaires différentes de mise au point dans un déroulement prédéterminé de la transition entre la première valeur de consigne de la position focale et la deuxième valeur de consigne de la position focale.

12. Dispositif de télécommande selon la revendication 11,
dans lequel les différentes valeurs intermédiaires de mise au point correspondent à des interpolations pondérées différemment entre la première valeur de consigne de la position focale et la deuxième valeur de consigne de la position focale, la pondération de l'interpolation variant selon le déroulement prédéterminé de la transition, de sorte que l'actionnement du deuxième élément de manipulation (39) permet de déclencher automatiquement une transition continue du réglage de la position focale ;
et/ou
le déroulement prédéterminé de la transition varie selon une durée prédéterminée ou une vitesse prédéterminée ;
et/ou
le déroulement prédéterminé de la transition correspond à une rampe linéaire.

13. Dispositif de télécommande selon la revendication 11 ou 12,
dans lequel le déroulement prédéterminé de la transition est mémorisé dans le dispositif de commande (23) ;
et/ou
le dispositif de commande (23) est conçu pour mémoriser plusieurs déroulements prédéterminés différents de la transition ;
et/ou
le dispositif de télécommande comprend une interface (31) qui permet à un utilisateur de programmer un déroulement souhaité de la transition entre la première valeur de consigne de la position focale et la deuxième valeur de consigne de la position focale ;
et/ou
le deuxième élément de manipulation est mobile par rapport à la partie de base (29) entre un nombre prédéterminé de positions de sélection discrètes.
